(19) Europäisches Patentamt
European Patent Office
Office européen des brevets

(11) **EP 1 556 728 B1**

(12) **EUROPÄISCHE PATENTSCHRIFT**

(45) Veröffentlichungstag und Bekanntmachung des Hinweises auf die Patenterteilung:
**02.07.2008 Patentblatt 2008/27**

(21) Anmeldenummer: **03778291.9**

(22) Anmeldetag: **28.10.2003**

(51) Int Cl.:
*G02B 21/00* *(2006.01)*

(86) Internationale Anmeldenummer:
**PCT/EP2003/011927**

(87) Internationale Veröffentlichungsnummer:
**WO 2004/038483 (06.05.2004 Gazette 2004/19)**

(54) **VERFAHREN ZUR VERBESSERUNG DER TIEFENDISKRIMINIERUNG OPTISCH ABBILDENDER SYSTEME**

METHOD FOR IMPROVING DEPTH DISCRIMINATION IN OPTICAL REPRODUCTION SYSTEMS

PROCEDE POUR AMELIORER LA DISCRIMINATION EN PROFONDEUR DE SYSTEMES DE REPRODUCTION OPTIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **28.10.2002 DE 10250568**

(43) Veröffentlichungstag der Anmeldung:
**27.07.2005 Patentblatt 2005/30**

(73) Patentinhaber: **CARL ZEISS JENA GmbH**
**07745 Jena (DE)**

(72) Erfinder:
• **BACKS, Bernhard**
**85386 Eching (DE)**
• **SCHAFFER, Jörg**
**37085 Göttingen (DE)**
• **SCHÄFER, Lutz**
**Kitchener,**
**Ontario N2P 2A2 (CA)**
• **VÖLCKER, Martin**
**89551 Königsbronn-Zang (DE)**

(56) Entgegenhaltungen:
**EP-A- 1 235 424        WO-A-02/12945**
**WO-A-97/06509**

• **HANLEY Q S ET AL: "SPECTRAL IMAGING IN A PROGAMMABLE ARRAY MICROSCOPE BY HADAMARD TRANSFORM FLUORESCENCE SPECTROSCOPY" APPLIED SPECTROSCOPY, THE SOCIETY FOR APPLIED SPECTROSCOPY. BALTIMORE, US, Bd. 53, Nr. 1, Januar 1999 (1999-01), Seiten 1-10, XP000822234 ISSN: 0003-7028**

EP 1 556 728 B1

**Beschreibung**

Die Erfindung betrifft ein Verfahren zur Tiefendiskriminierung optisch abbildender Systeme. Es ist insbesondere in der Lichtmikroskopie anwendbar um eine Erhöhung der Bildqualität bei der Untersuchung dreidimensional ausgedehnter Objekte zu erreichen.

In der klassischen Lichtmikroskopie besteht bei der Untersuchung dreidimensional ausgedehnter Objekte, d.h. von Objekten, deren Ausdehnung entlang der optischen Achse größer ist als die Tiefenschärfe der verwendeten Objektive, das Problem, dass das scharfe Bild aus dem Fokusbereich mit außerfokalen Bildanteilen, welche demzufolge unscharf abgebildet werden, überlagert ist

Um dieses Problem zu überwinden ist die Nutzung der konfokalen Abbildung bekannt, bei der mittels eines sogenannten Pinholes das aus dem nicht im Fokus liegenden Bereich stammende Licht ausgeblendet wird und somit nicht zur Abbildung beiträgt. Auf diese Weise entsteht ein sogenannter optischer Schnitt. Diese konfokale punktweise Abbildung erfordert das Abrastern des Objektes in der Bildebene um ein Bild zu erhalten. Diese Abtastung kann entweder mittels Scannern in Laser Scanning Mikroskopen oder mittels Nipkow-Scheiben erfolgen.

Durch Aufnahme mehrerer optischer Schnittbilder in verschiedenen Fokuslagen kann ein "z-Stapel" gewonnen werden, welcher eine dreidimensionale Darstellung des Objektes ermöglicht.

Ein anderer Weg zur Erzeugung optischer Schnitte ist die Anwendung der strukturierten Beleuchtung. Diese wurde erstmals von Meir Ben-Levy und Eyal Pelec in WO 97/6509 angegeben. Verbesserungen und Erweiterungen dieser Methode wurden von Tony Wilson et al. in WO 98/45745 und von Volker Gerstner et al. in WO 02/12945 beschrieben.

In WO 97/6509 wird das Objekt mit einer periodischen Struktur (Sinus- oder Rechteckgitter) beleuchtet und mittels einer Kamera ein Bild des Objektes aufgenommen, digitalisiert und in einem Speicher abgespeichert. Anschließend wird die periodische Struktur innerhalb der Bildebene so verschoben, dass die Phasenlage der Struktur geändert wird, und wieder ein Bild aufgenommen und abgespeichert. Dieser Vorgang (Verschiebung, Bildaufnahme, Abspeicherung) kann mehrfach wiederholt werden. Anschließend werden die Bilder miteinander verrechnet um ein Schnittbild zu erzeugen. Als mathematischer Ansatz wird dabei eine Fourierentwicklung angegeben, was zu einem komplizierten Formelapparat führt. In WO 98/45745 wird eine einfachere Formel für die Schnittbilder angegeben, welche sich durch Vereinfachung des Ansatzes aus WO 97/6509 für den Falls jeweils gleicher Phasenverschiebungen zwischen den einzelnen Aufnahmen herleiten lässt.

Die Realisierung der für die Anwendung der angegebenen Verfahren notwendigen physikalischen Randbedingungen erweist sich in der Praxis als sehr schwierig. So führt z. B. die Schwankung der Lampenhelligkeit zwischen den verschiedenen Aufnahmen zu streifenförmigen Artefakten in den generierten Schnittbildern. Bei Fluoreszenzobj ekten treten zusätzliche Probleme durch die zeitabhängige Ausbleichung der Fluoreszenzfarbstoffe auf, welche gleichfalls zu Fehlern führt. Auch die notwendige Konstanz der einzelnen Phasenverschiebungsschritte lässt sich in der Praxis nicht einhalten.

In WO 02/12945 wird daher vorgeschlagen, mittels Auskopplung eines Teils des zur Beleuchtung des Objekts dienenden Lichtes, Registrierung der Intensität und anschließende Normierung der Einzelaufnahmen den Einfluss der zeitlich unterschiedlichen Lampenhelligkeit auszugleichen. Für die Berücksichtigung ungleicher Phasenverschiebungsschritte wird ein Gleichungssystem (dort Gl. 22) angegeben. Zum Ausgleich der Ausbleichung wird vorgeschlagen, statt der mindestens notwendigen drei Aufnahmen je Schnittbild 6 Aufnahmen in der Reihenfolge 1-2-3-3-2-1 zu registrieren, zwei Schnittbilder (aus 1-2-3 und 3-2-1) zu berechnen und von diesen beiden den Mittelwert zu bestimmen.

Die Realisierung dieser Vorschläge erfordert erheblichen instrumentellen Aufwand. Außerdem verlängert die Aufnahme zusätzlicher Bilder die notwendige Aufnahmezeit und erhöht damit auch die Belastung der Probe durch Beleuchtung mit dem Fluoreszenzanregungslicht.

Die Erfindung stellt sich die Aufgabe, die Nachteile des Standes der Technik zu vermeiden und ein verbessertes Verfahren zur Bestimmung optischer Schnittbilder anzugeben.

Diese Aufgabe wird durch ein Verfahren zur Verbesserung der Tiefendiskriminierung optisch abbildender Systeme gemäß dem Hauptanspruch gelöst.

Die Erfindung wird im folgenden anhand der Figuren näher beschrieben.

Es zeigen:

Fig. 1    den prinzipiellen Aufbau eines Mikroskops mit strukturierter Beleuchtung

Fig. 2    eine schematische Darstellung der erfindungsgemäßen Bandpassfilter in der Fourierebene

Fig. 3    schematisch die Lage der Abbildungen der periodischen Struktur

Fig. 4    einen Ablaufplan für die Bestimmung der Korrekturwerte durch lineare Optimierung.

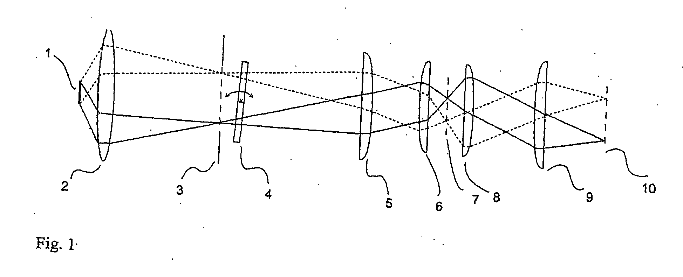

In Fig.1 ist das vereinfachte optische Schema der strukturierten Beleuchtung am Beispiel der Durchlichtbeleuchtung dargestellt. Eingezeichnet ist der bildgebende Strahlengang (Lukenstrahlengang). Eine 1-dimensionale periodische Struktur (Transmissionsgitter) (3), welche sich in einer Schärfeebene der dargestellten optischen Anordnung befindet, wird durch eine Lichtquelle (1) und nachfolgender Kollektoroptik (2) beleuchtet. Dem Gitter folgt in Lichtrichtung eine planparallele Glasplatte (4). Der Winkel der planparallelen Platte zur optischen Achse kann definiert eingestellt werden. Durch die nachfolgende beleuchtungsseitigen Optiken (5,6) (Kondensor) wird die Struktur in die Präparatebene (7) abgebildet. Von dem Präparat ausgehendes Licht wird wiederum über ein Linsenpaar (8, 9) (Objektiv und Tubuslinse) in die darauffolgende Schärfenebene (10) abgebildet, in welcher z. B. eine CCD-Matrix einer digitalen Kamera angeordnet sein kann. Dabei dient die planparallele Glasplatte (4) durch definierte Verkippung zur Verschiebung der Abbildung der Gitterstruktur (3) auf das in der Präparatebene (7) befindliche Objekt. Vorzugsweise dient im Fall der Auflicht-Fluoreszenz-Beobachtung das Objektiv (8) gleichzeitig als Kondensor.

Wie in WO 02/12945 beschrieben wurde werden jetzt mit mindestens 3 Stellungen der Glasplatte (4) mittels der digitalen Kamera jeweils eine Registrierung der sich ergebenden Helligkeitsverteilung im Objekt durchgeführt.

Dabei kann die Helligkeitsverteilung $I_i$ (x, y) für den Fall eines Sinus/Kosinus-Gitters vereinfacht durch die Formel

$$I_i(x,y) = I_0(x,y) \cdot (1 + m(x,y) \cdot \cos(\phi_0(x,y) + \phi_i(x,y))) \qquad (1)$$

angegeben werden, wobei i=0 ... N-1 die i-te Phasenposition des projizierten Gitters und N die Anzahl der Registrierungen ist, m(x, y) die Modulationstiefe des Objekts (und damit die gesuchte Bildinformation an der Stelle x, y) ist und die $\phi_i$ die Phasenwerte sind.

Diese Gleichung enthält die drei unbekannten Größen $I_0$, m und $\phi_0$. Somit kann durch mindestens drei Messungen bei gezielt variiertem $\phi_i$ (i =1, 2, 3) die Bestimmung dieser Größen erfolgen. Die Lösung kann durch einen kleinste-Quadrate-Ansatz aus den Messungen gewonnen werden. Dazu bietet es sich an, Gleichung (1) in einer kompakteren Form darzustellen und die Cosinus-Funktion mittels Additionstheorem umzuschreiben:

$$I(x,y,\phi_i) = a_0(x,y) + a_1(x,y) \cdot f_1(\phi_i) + a_2(x,y) \cdot f_2(\phi_i) \qquad (2)$$

mit

$$f_1(\phi_i) = \cos \phi_i$$

$$f_1(\phi_i) = \sin \phi_i$$

$$a_0(x,y) = I_0(x,y)$$

$$a_1(x,y) = I_0(x,y) \cdot m(x,y) \cdot \cos \phi_0(x,y)$$

$$a_2(x,y) = -I_0(x,y) \cdot m(x,y) \cdot \sin \phi_0(x,y)$$

Die Funktionen $f_1$ und $f_2$ hängen somit nur von den im Prinzip frei zu wählenden Phasenverschiebungen $\phi_i$ ab. Für den Fall nichtsinusförmiger, aber periodischer Struktur kann die Helligkeitsverteilung $I_i$ (x, y) auch durch Reihenentwicklung approximiert werden, das Prinzip der Rechnung bleibt dabei im Grunde gleich. Die kleinste-Quadrate-Lösung lautet in Matrixschreibweise

$$\hat{M} \cdot \vec{a} = b \qquad (3)$$

mit

$$\hat{M} = \begin{pmatrix} N & \sum_N f_1(\phi_i) & \sum_N f_2(\phi_i) \\ \sum_N f_1(\phi_i) & \sum_N f_1^2(\phi_i) & \sum_N f_1(\phi_i)f_2(\phi_i) \\ \sum_N f_2(\phi_i) & \sum_N f_1(\phi_i)f_2(\phi_i) & \sum_N f_2^2(\phi_i) \end{pmatrix} \quad (4)$$

mit N = Anzahl Messungen (hier: Phasenschritte) und

$$\vec{a} = \begin{pmatrix} a_0(x,y) \\ a_1(x,y) \\ a_2(x,y) \end{pmatrix} \quad (5)$$

sowie

$$\vec{b} = \begin{pmatrix} \sum_N I(x,y,\phi_i) \\ \sum_N [I(x,y,\phi_i) \cdot f_1(\phi_i)] \\ \sum_N [I(x,y,\phi_i) \cdot f_2(\phi_i)] \end{pmatrix} \quad (6)$$

Die Lösung dieser Matrixgleichung wird mathematisch durch invertieren der Matrix M gewonnen.

$$\begin{pmatrix} a_0(x,y) \\ a_1(x,y) \\ a_2(x,y) \end{pmatrix} = \hat{M}^{-1} \cdot \vec{b} \quad (7)$$

Somit können aus den Messungen, dargestellt durch den Vektor b, und den Phasenverschiebungen des Gitters die gesuchten unbekannten Größen ermittelt werden. Insbesondere ergibt sich die Modulationstiefe am Ort (x, y) zu

$$m(x,y) = \frac{\sqrt{a_1^2(x,y) + a_2^2(x,y)}}{a_0(x,y)} \quad (8)$$

Da mit Defokussierung des Objektes der Gitterkontrast und damit zwangsläufig die Modulationstiefe im Objekt abnimmt, stellt Gleichung (8) eine Bestimmungsgleichung zum Erhalt eines tiefendislaiminierten Bildes (optischer Schnitt) dar. Gleichungen (2) und (3) liefern einen universalen Lösungsweg, der die Anpassung der Phasenlagen $\phi_i$ an die jeweils experimentellen Gegebenheiten erlaubt. So ist etwa die Wahl der Zahl der Schritte und die Positionen im Objektraum (Ort der abgebildeten Gitterlinien) frei wählbar.
Jedes optische System überträgt gemäß seiner optischen Transferfunktion Raumfrequenzen bis zu einem Grenzwert, der durch die numerische Apertur NA der Optik und der Lichtwellenlänge $\lambda$ bestimmt ist:

$$k_{max} = \frac{4\pi NA}{\lambda}$$

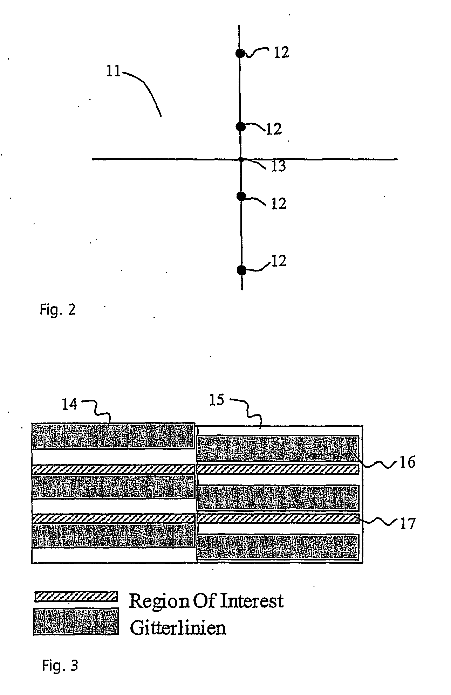

Dies hat zur Folge, dass von einem in den Objektraum abgebildeten Gitter, welches kein reines Sinus-Gitter ist, die höheren Harmonischen der Gitterperiode bis zu eben dieser Grenzfrequenz $k_{max}$ übertragen werden und sich in dem Fourier-transformierten Bild des Objektes als lokale Maxima wiederfinden. Auch in einem nach dem oben angeführten Schema ermittelten Schnittbild sind diese Komponenten des Gitters enthalten und resultieren in Streifenartefakten. Diese Artefakte sind dadurch eliminierbar, dass die Harmonischen des projizierten Gitters durch Fourier-Transformation im Raumfrequenzspektrum lokalisiert und durch gezieltes Setzen von Filtern (Bandpass-Filter, Bandstops) entfernt werden. Eine anschließende Rücktransformation führt dann zu artefaktfreie Bildern. Diese Methode ist schematisch in Fig. 2 dargestellt. In der Fourierebene (11) sind mit (12) die höheren Harmonischen der Gitterstruktur (3) bezeichnet, (13) bezeichnet den Nullpunkt und entspricht dem Gleichanteil der Beleuchtung, d.h. einer gleichmäßigen, nicht strukturierten Beleuchtung. Durch Einbringen den Harmonischen (12) entsprechender Bandpass-Filter in den Strahlengang tragen diese Bereiche nicht zur Abbildung bei und werden damit nicht von der digitalen Kamera registriert. Bei fluoreszierenden Objekten tritt ein weiterer Grund zum Auftreten von Streifenartefakten hervor, nämlich das Fluoreszenz-Bleichen (photobleaching, fluorescence fading). Hierbei kommt es durch die Abbildung der Struktur (z.B. des Gitters) in das Objekt zu Regionen unterschiedlich starker Ausbleichung der Fluoreszenz und somit schließlich zu Streifenartefakten in jedem in der Folge aufgenommenem Bild. Die Frequenzanteile der Artefakte im Spektrum eines solchen Bildes sind besonders stark bei der Grundfrequenz der projizierten Struktur. Durch Entfernen der Raumfrequenzanteile der projizierten Struktur im Fourier-transformierten Bild durch entsprechende Bandpass-Filter und anschließender Rücktransformation kann auch hier prinzipiell ein artefaktfreies Bild erzeugt werden.

Die Verhinderung von diesen bei der Fluoreszenzbeleuchtung auftretenden Artefakten kann auch durch die Bestimmung und Ausnutzung der Bleicheigenschaften von fluoreszierenden Objekten bei der sequentiellen Aufnahme von Bildern desselben Objekts erreicht werden. Hierbei ergibt sich pro Bildaufnahme durch die Beleuchtung eine Bleichung des Objekts an den beleuchteten Stellen. Die Stärke des Bleichens hängt neben der Beleuchtungsintensität von den photochemischen und photophysikalischen Eigenschaften des fluoreszierenden Objektes ab. Die Bestimmung der Fluoreszenzstärke des Objektes durch Integration der Intensitäten über alle oder ausgewählte Objektorte (x, y) ermöglicht die Reskalierung der Bildsequenz nach erfolgter Aufnahme der Bilder. Dazu werden entweder über analoger Kamera und Analog-Digital-Wandler oder einer CCD-Kamera in einem Computer gespeicherten Bildinformationen durch paarweise Ermittlung von Quotienten der Fluoreszenzstärken der Bilder die Intensitäten an den Bildorten (x,y) auf einen Maximalwert normiert. Somit lässt sich der Fluoreszenzverlust durch Fluoreszenzbleichen berücksichtigen. Dazu können nach Fig. 3 Regions of Interest (ROI) definiert werden, die bei beiden Bildaufnahmen gleichermaßen beleuchtet werden und in Folge fluoreszieren, das Maß der Abnahme der Fluoreszenz in diesen Bereichen ist ein Maß für die Bleich-Rate und kann damit für die Normierung der verschiedenen Registrierungen der Helligkeitsverteilung herangezogen werden. Die Definition dieser ROIs kann dabei sowohl vom Benutzer über entsprechende Eingabemittel als auch automatisch (aus der jeweiligen Lage der abgebildeten Struktur) erfolgen. In Fig. 3 stellt (14) die Verhältnisse bei einer ersten Registrierung der Helligkeitsverteilung auf dem Objekt dar, (15) die Verhältnisse bei einer zweiten Registrierung mit veränderter Phasenlage der abgebildeten Struktur (16). Die Regions of Interest (17) werden vorteilhafterweise so definiert, dass in beiden Registrierungen gleichmäßige Beleuchtung erfolgt.

Das erfindungsgemäße Verfahren erlaubt die Bestimmung von optischen Schnittbildern praktisch für beliebig gewählte Phasenverschiebungen $\phi_i$. Zur Verhinderung von Fehlern sind die Phasenverschiebungen $\phi_i$ mit hoher Genauigkeit zu bestimmen. Dieses lässt sich in einfacher Weise mit dem im folgenden beschriebenen Kalibrierungsverfahren sichern, bei dem die Einflüsse des gesamten Systems berücksichtigt werden.
Dazu wird zunächst ein Referenzbild (Objekt mit überlagertem Gitter) aufgenommen und registriert. Daraufhin erfolgt eine geringe Phasenverschiebung des Gitters auf eine zunächst unbekannte Phasenlage des Gitters (es soll diese "Verschiebung pro Ansteuerungssignal" erst kalibriert werden) und erneute Bildaufnahme. Die erhaltenen zwei Bilder werden nun rechnerisch verglichen. Dies kann ohne Einschränkung der Allgemeinheit durch Differenzbildung, Summierung oder jede andere Art erfolgen, die auf eine Merit-Funktion führt. Resultat ist zunächst im Allgemeinen ein Streifenbehaftetes Bild. Die Schritte: Verschiebung des Gitters um einen kleinen Betrag, Bildaufnahme, Vergleich mit dem Referenzbild werden so lange wiederholt, bis die Merit-Funktion den Extremwert erreicht, also z.B. ein Differenzbild nur noch aus Untergrundrauschen besteht oder ein Summenbild maximale Werte erreicht. Ist letzteres erfüllt, ist die Kalibration abgeschlossen und ein so erhaltener Ansteuerwert kann in einem Speichermedium zum späteren Zweck abrufbar gehalten werden. Dieser Wert entspricht damit genau der Verschiebung des Gitters um eine volle Periode. Alternativ ist es auch möglich, ein Summenbild auf gleichmäßige Helligkeitsverteilung (d.h. Verschwinden der Streifenstruktur) zu bewerten. In diesem Fall entspricht dieser Wert dann der Verschiebung des Gitters um eine halbe Periode. Vorzugsweise wird diese Prozedur mit einem Spiegel als Objekt durchgeführt. Der beschriebene Vorgang kann sowohl manuell als auch automatisiert erfolgen.

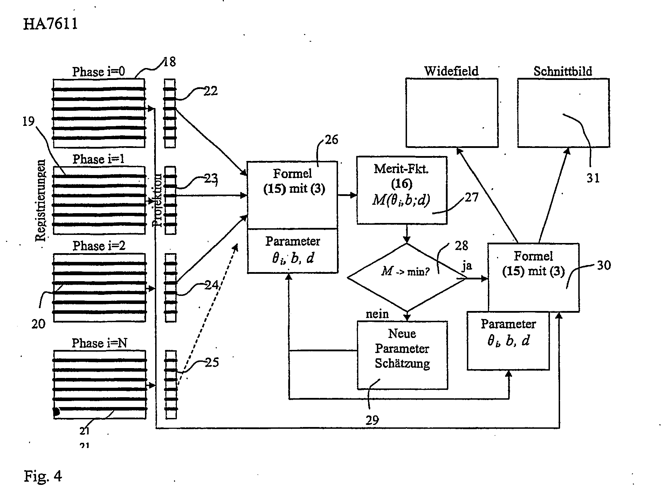

Im folgenden wird an Hand der Fig. 4 ein alternatives Verfahren zur Bestimmung der Einflüsse von Lampenhelligkeitsschwankungen, Ausbleichen des Objektes bei Fluoreszenzbeleuchtung und nicht-sinusförmigem Gitter beschrieben.

Dazu wird die zeitliche Veränderung der Beleuchtung durch intensitätsproportionale skalare Faktoren $\theta_i > 0$ beschrieben werden, welche bei jeder aufeinanderfolgenden Aufnahme berücksichtigt werden (die Abhängigkeit der Größen $\mathbf{g}_i$, $\mathbf{o}_i$, usw, vom Ort (x,y) wird im Folgenden zur Vereinfachung nicht mehr explizit angegeben):

$$\mathbf{g}_i = \theta_i \mathbf{o}_i \qquad\qquad . \qquad\qquad (9)$$

Die modellierte Beobachtung $\mathbf{g}_i$ ergibt sich nun aus dem Produkt mit dem idealen, konsistenten Phasenbild $\mathbf{o}_i$. Um vollständig ein gestörtes System zu beschreiben, braucht man nur *N-1* Faktoren $\theta_i$ zu bestimmen.

Das Ausbleichen des Objekts bei Fluoreszenzbeleuchtung wirkt in Abhängigkeit von der einwirkenden Strahlungsintensität über die Zeit Diese ist wegen des projizierten Gitters örtlich verschieden und erfordert deshalb eine Behandlung, die die Gitterfunktion berücksichtigt. Eine einfache Beschreibung wird möglich, wenn man das Ausbleichen als eine lineare Funktion der Beleuchtungsintensität annimmt:

$$\mathbf{k}_i = \left(1 - d\,\mathbf{o}_{i-1}\mathbf{k}_{i-1}\right)\prod_{j=0}^{i-1}\mathbf{k}_j, \, i \geq 1 \quad . \quad \text{mit } \mathbf{k}_0 = \underline{1} \qquad\qquad (10)$$

Der aus ortsvarianten Faktoren bestehende Vektor $\underline{0} < \mathbf{k}_i \leq \underline{1}$ soll abhängig vom Verlauf der Bestrahlungsintensität und einem wählbaren Maß $1 > d \geq 0$ für das Ausbleichen die Abschwächung beschreiben, wenn man ihn komponentenweise mit den jeweils noch nicht ausgeblichenen Beobachtungen $\mathbf{o}_i$ multipliziert:

$$\mathbf{g}_i = \mathbf{o}_i \mathbf{k}_i \qquad\qquad (11)$$

Aus (**10**) geht hervor, dass immer jede Beobachtung mit den Faktoren aller vorhergehenden Phasenaufnahmen multipliziert wird, diese sind bereits z.T. ausgeblichen und überlappen sich mit der momentanen Phase. Alternativ kann man $\mathbf{k}_i$ auch exponentiell d.h. entsprechend der Abklingkurve eines bestimmten Fluorochromes beschreiben.

Nichtsinusförmige Gitterverläufe verursachen Streifenartefakte insbesondere für ganzzahlige Vielfache der Gitterfrequenz. Unter genauer Kenntnis von Frequenz, Phasenlage und Kurvenform des Gitters bei den einzelnen Aufnahmen wird es möglich einen sinusförmigen Verlauf zu erzeugen. Ein Korrekturvektor $\mathbf{l}_{Korr}$, ähnlich wie unter (**10**), hier jedoch entlang der Gitterperiodizität, soll unter (**12**) betrachtet werden.

$$\mathbf{l}_{Korr} = \frac{f_{Sinus}}{f_{Gitter} + s} \qquad\qquad (12)$$

Die Nachbildung der observierten Gitterfunktion ist mit $f_{Gitter}$ gekennzeichnet. Ein ideal sinusförmiger Intensitätsverlauf wird mit $f_{Sinus}$ zum Ausdruck gebracht. Die Konstante *s* im Nenner soll die Division durch sehr kleine Werte von $f_{Gitter}$ übernehmen. Die Nachbildung der observierten Gitterfunktion kann auf verschiedenen Wegen geschehen. Eine einfache Möglichkeit einer Approximation bietet sich z.B. durch die Verwendung einer Fourierreihe für die Trapezfunktion an.

$$f_{Gitter}(x;b) = \frac{1}{2} + \frac{2}{b\pi}\sum_{i=1}^{M}\frac{\sin(2bi - b)}{(2i-1)^2}\sin(2xi - x) \qquad\qquad (13)$$

Mit *b* kann man die Flankensteilheit der Trapezübergänge variieren, x ist die Ortskoordinate und *M* die Anzahl der benutzten Fourierkoeffizienten. Alternativ lassen sich auch genauere Modelle verwenden. Diese erfordern die Faltung

EP 1 556 728 B1

der wahren Gitterfunktion mit einer lateralen Komponente der PSF des Mikroskops. Von entscheidender Bedeutung ist eine phasen- und frequenzsynchrone Synthetisierung des Korrekturvektors $\mathbf{l}_{Korr}$. Ist dies gewährleistet, so kann ähnlich wie unter (11) mit einer einfachen komponentenweisen Multiplikation ein korrigiertes Ergebnis für die Observation erzielt werden.

$$\mathbf{g}_{i\,Korr} = \mathbf{g}_i \mathbf{l}_{i\,Korr} \qquad\qquad (14)$$

Die korrigierten Phasenbilder erhält man nun aus:

$$I_i = \mathbf{o}_i = \frac{\mathbf{g}_i \mathbf{l}_{i\,Korr}}{\mathbf{k}_i \, \theta_i}, \text{mit } \theta_i > 0 \cap \mathbf{k}_i > \underline{0} \qquad (15)$$

Durch Einsetzen von (15) in Gleichung (3) bzw. (8) erhält man eine allgemeine Formel zur Rekonstruktion, welche außerdem die Parameter $\theta_i$, $d$ und $b$ enthält.

Die Lösung des gestellten Problems kann beispielsweise durch Umformung in eine Extremalaufgabe erfolgen. Mit den Hilfsmitteln numerischer Optimierung kann man die Parameter $\theta_i$, $d$ und $b$ unter Zuhilfenahme einer Merit-Funktion bestimmen.

$$\mathrm{M}(\theta_i; d; b) = \alpha_0 \left|F\{\vec{a}\}_0\right|^2 + \alpha_1 \left|F\{\vec{a}\}_\omega\right|^2 + \alpha_2 \left|F\{\vec{a}\}_{2\omega}\right|^2 + \dots + \alpha_n \left|F\{\vec{a}\}_{n\omega}\right|^2 \to \min \ (16)$$

Hierbei ist $F\{a\}_\omega$ eine Komponente der Fourier-Transformation des Resultatsvektors $a$ aus Gleichung (5). Dabei sind neben der Fourier-Transformation auch andere Funktionaltransformationen geeignet.

Dabei ist die Meritfunktion (Gleichung (16)) hier nur beispielsweise genannt, es sind auch andere Meritfunktionen anwendbar.

Ziel ist es $\theta_i$, $d$ und $b$ so zu variieren, dass (16) minimiert wird. Dafür bietet sich eine Vielzahl von Methoden an die keinesfalls eingeschränkt zu Gradienten- oder Liniensuchmethoden zu sehen sind. Jeder Transformationskoeffizient ist außerdem gewichtet mit einem Koeffizienten $\alpha_i$. Damit kann der Algorithmus an verschiedene Signal-Rausch Abstände oder bevorzugte Frequenzen angepasst werden. Ein diesbezüglich vorteilhafter Wert den Gleichanteil zu wichten ergibt sich mit folgender Beziehung:

$$\alpha_0 \propto \frac{\left|F\{\vec{a}\}_1\right|^2 + \left|F\{\vec{a}\}_2\right|^2 + \dots + \left|F\{\vec{a}\}_n\right|^2}{\left|F\{\vec{a}\}_0\right|^2} \qquad (17)$$

Die allgemeine Funktionsweise des hier beschriebenen Korrekturapparates ist dem schematischen Ablaufplan in Fig. 4 zu entnehmen. Die Verwendung von Projektionen ist vorteilhaft um effizient die Parameter $\theta_i$, $d$ und $b$ zu bestimmen. Die Parameterermittlung ist aber nicht auf diesen eindimensionalen Fall eingeschränkt, sondern funktioniert in der Ebene in analoger Weise.

Es werden bei fester Fokuslage von der Kamera mindestens drei Helligkeitsverteilungen (18), (19), (20), ggf. auch mehr (21), mit verschiedenen Phasenlagen i=1, 2, 3, ..., N der auf das Objekt abgebildeten Gitterstruktur registriert. Mittels Projektion werden diese 2-dimensionalen Helligkeitsverteilungen jeweils in eine 1-dimensionale Verteilung (22), (23), (24), und ggf. (25) überführt. Mit Anfangswerten für die Parameter $\theta_i$, $d$ und $b$ werden nach Formel (15) korrigierte Phasenbilder berechnet und aus diesen mittels des Ansatzes aus Formel (3) ein erstes Bild des optischen Schnitts errechnet (26). Die Anfangswerte der Parameter $\theta_i$, $d$ und $b$ können dabei vom Bediener eingegeben oder auch automatisch geschätzt werden. Für diese Schätzung können bekannten Tools der Minimierung /Maximierung einer Merit-Funktion benutzt werden (z. B. Simplex, Marquardt, o.a.). Aus diesem Ergebnis wird nun in (27) die Merit-Funktion nach Formel (16) bestimmt und in (28) auf das Erreichen eines Minimums getestet. Ist das Minimum noch nicht erreicht wird eine neue Schätzung der Parameter $\theta_i$, $d$ und $b$ durchgeführt (29) und mit (26) fortgesetzt. Für den Fall des Erreichens des Minimums der Merit-Funktion, d.h. weitere Variation der Parameter $\theta_i$, $d$ und $b$ lassen ihren Wert wieder ansteigen, sind die optimalen Parameter bestimmt und in (30) wird das optische Schnittbild mittels der Formeln (15), (3) und (8) bestimmt und in (31) ausgegeben. Anschließend kann die Fokuslage verändert werden und nach dem dargestellten Verfahren ein weiteres optisches Schnittbild bestimmt werden usw.. Durch dieses Abrastern des Objektes in z-Richtung lässt sich ein z-Stapel von Schnittbildern und damit eine dreidimensionale Darstellung des Objekts generieren.

Ein anderer Ansatz zur Berücksichtigung von Ausbleicherscheinungen des Objekts bei der Fluoreszenzbeleuchtung beruht auf der Bestimmung einer lokalen Korrekturfunktion. Dazu wird eine Korrekturfunktion $\kappa_i(x)$

$$\kappa_i(x) = \frac{\int_{x-\tau/2}^{x+\tau/2} g_1(\xi)\,d\xi}{\int_{x-\tau/2}^{x+\tau/2} g_i(\xi)\,d\xi} \tag{18}$$

angenommen, deren lokaler Wert über eine Gitterperiode $\tau = 2\pi/\omega$ gebildet wird. Der Ansatz dieser Funktion kann auch die Abhängigkeit von y, der hier zur Gitterperiode senkrecht angenommen Koordinate berücksichtigen, was hier jedoch auch Gründen der Übersichtlichkeit weggelassen wird. Unter Verwendung einer ortsvariablen Ausbleichfunktion $\theta_i(x)$ und durch geeignete Umfomungen mit der Näherung (siehe auch Formel (1) und (9)) $g_i(x) = \theta_i(x)I_0(x)[1+m\cos(\omega x+\varphi_i)]$, läßt sich zeigen

$$\kappa_i(x) = \frac{\int_{x-\tau/2}^{x+\tau/2} I_0(\xi)\,d\xi + m\int_{x-\tau/2}^{x+\tau/2} I_0(\xi)\cos(\omega\xi+\varphi_1)\,d\xi}{\int_{x-\tau/2}^{x+\tau/2} \theta_i(\xi)I_0(\xi)\,d\xi + m\int_{x-\tau/2}^{x+\tau/2} \theta_i(\xi)I_0(\xi)\cos(\omega\xi+\varphi_i)\,d\xi}$$

dass bei gleichmässiger Ausbleichfunktion diese Korrekturfunktion proportional zu $1/\theta_i(x)$ wird. Es hat sich gezeigt, dass es von Vorteil ist, wenn die Mittelwertbildung über mehr als eine Gitterperiode ausgeführt wird.

Weiterhin hat sich gezeigt, dass diese Korrekturfunktion in der Nähe von Kanten in der Ausbleichfunktion zu Überschwingen neigt und damit zusätzliche Verfälschungen des Ergebnisses erzeugen kann. Um dem abzuhelfen hat sich bewährt, das Auftreten des Überschwingens durch Vergleich mit einem Mittelwert zu erkennen und an diesen Stellen anstatt des verfälschten Wertes den aus den Formeln (9) und (16) vorher bestimmten globalen Wert $1/\theta_i$ einzusetzen. Die entsprechende Formel lautet dann:

$$\kappa_i^{\cdot}(x) = \begin{cases} \kappa_i(x) & \text{für} \quad \left| \kappa_i(x) - \int_{x-\tau}^{x+\tau} \kappa_i(\xi)\,d\xi \right| < \cdot\varepsilon \\ 1/\theta_i & \text{ansonsten} \end{cases} \tag{19}$$

Dabei ist es vorteilhaft, die Schwelle $\varepsilon$ als Prozentwert der Variation der lokalen Veränderlichkeit der Korrekturfunktion innerhalb des Bildes zu setzen, z.B. 5%. Anstatt von $1/\theta_i$ können auch interpolierte Werte von $k_i(x)$, welche unterhalb der Schwelle im zweidimensionalen Raum berechnet wurden, verwendet werden.

Dieses Verfahren berücksichtigt somit ortsabhängig schwankende Ausbleicherscheinungen z.B. aufgrund verschiedener Fluorophore oder schwankender Eigenschaften selbiger.

Die Realisierung der Erfindung ist nicht an die dargestellten Ausführungsbeispiele gebunden, durch fachmännische Weiterentwicklungen oder andere Ansätze zur Berücksichtigung der Helligkeitsschwankungen der Lichtquelle oder des Ausbleichen des Objektes bei der Fluoreszenzbeleuchtung wird der Bereich der Erfindung nicht verlassen.

**Patentansprüche**

1.  Verfahren zur Verbesserung der Tiefendiskriminierung optischer Systeme bei dem

    a) ein Objekt mit einer periodischen Struktur beleuchtet wird,
    b) eine Registrierung der so entstehenden Helligkeitsverteilung erfolgt,
    c) die Phasenlage der periodischen Struktur verschoben wird,
    d) die Schritte a) bis c) sooft wiederholt werden bis mindestens drei Helligkeitsverteilungen registriert wurden,
    e) die registrierten Helligkeitsverteilungen miteinander verrechnet werden um eine Objekthelligkeitsverteilung zu erhalten,

f) die Verschiebungen der Phasenlagen aus Schritt c) registriert werden,

g) Helligkeitsschwankungen der Beleuchtung erfasst werden,

h) Ausbleicherscheinungen des Objekts bei Fluoreszenzbeleuchtung bestimmt werden, und die Verrechnung unter Berücksichtigung der in den Schritten f) bis h) gewonnenen Ergebnisse erfolgt,

**gekennzeichnet dadurch,**

**dass** aus den in den Schritten f) bis h) gewonnenen Ergebnissen Korrekturwerte durch lineare Optimierung unter Zuhilfenahme einer Merit-Funktion der Form

$$M(\theta_i; d; b) = \alpha_0 \left| F\{\vec{a}\}_0 \right|^2 + \alpha_1 \left| F\{\vec{a}\}_\omega \right|^2 + \alpha_2 \left| F\{\vec{a}\}_{2\omega} \right|^2 + \ldots + \alpha_n \left| F\{\vec{a}\}_{n\omega} \right|^2 \rightarrow \min$$

bestimmt werden, welche bei der Verrechnung des tiefendiskriminierten Bildes analytisch berücksichtigt werden, wobei $F\{\vec{a}\}$ eine Funktionaltransformierte des Vektors $\vec{a}$ ist, $\theta_i$ skalare Faktoren zur Charakterisierung der Beleuchtungshelligkeitsschwankung sind, $d$ ein Maß für das Ausbleichen des Objekts bei Fluoreszenzbeleuchtung ist, $b$ ein Faktor zur Charakterisierung der nichtsinusförmigen Verteilung der Beleuchtung des Objekts ist und die $\alpha_i$ Gewichtskoeffizienten zur Anpassung an die Aufnahmebedingungen vorzugsweise bzgl. verschiedener Signal-Rausch Abstände oder bevorzugter Frequenzen sind.

**Claims**

1. Method for improving depth discrimination in optical systems in which

   a) an object with a periodical structure is illuminated,

   b) the brightness distribution thus produced is recorded,

   c) the phase position of the periodical structure is shifted,

   d) steps a) to c) are repeated until at least three brightness distributions have been recorded,

   e) the recorded brightness distributions are offset with each other in order to obtain an object brightness distribution,

   f) the shifts in the phase positions from step c) are recorded,

   g) brightness fluctuations in the illumination are detected,

   h) bleaching out phenomena of the object under fluorescent illumination are determined, and the offsetting is carried out under consideration of the results obtained in steps f) to h),

   **characterised in that**

   from the results obtained in steps f) to h) correction values are determined by linear optimisation with the aid of a merit function of the form

$$M(\theta_i; d; b) = \alpha_0 \left| F\{\vec{a}\}_0 \right|^2 + \alpha_1 \left| F\{\vec{a}\}_\omega \right|^2 + \alpha_2 \left| F\{\vec{a}\}_{2\omega} \right|^2 + \ldots + \alpha_n \left| F\{\vec{a}\}_{n\omega} \right|^2 \rightarrow \min$$

   which can be analytically considered during the offsetting of the depth-discriminated image, wherein $F\{\vec{a}\}$ is a functional transform of the vector $\vec{a}$, $\theta_i$ are scalar factors for characterising the illumination brightness fluctuation, $d$ is a measure of the bleaching out of the object under fluorescent illumination, $b$ is a factor for characterising the non-sinusoidal distribution of the illumination of the object and the $\alpha_i$ are weighting coefficients for adaptation to the recording conditions preferably with respect to different signal-noise intervals or preferred frequencies.

**Revendications**

1. Procédé d'amélioration de la discrimination en profondeur de systèmes optiques, dans lequel

   a) on éclaire un objet possédant une structure périodique,

   b) on enregistre la distribution de la luminosité qui en résulte,

   c) on décale la position de phase de la structure périodique,

   d) on répète les étapes a) à c) autant de fois que nécessaire jusqu'à ce que trois distributions de la luminosité au moins aient été enregistrées,

e) on combine les distributions de la luminosité enregistrées les unes avec les autres afin d'obtenir une distribution de la luminosité de l'objet,

f) en enregistre les décalages des positions de phase de l'étape c),

g) on détecte les variations de luminosité de l'éclairage,

h) on détermine les phénomènes d'atténuation de la couleur de l'objet sous éclairage fluorescent et on effectue les calculs en tenant compte des résultats obtenus dans les étapes f) à h),

**caractérisé en ce que** l'on détermine à partir des résultats obtenus dans les étapes f) à h) des valeurs de correction par une optimisation linéaire faisant appel à une fonction de mérite de la forme suivante:

$$M(\theta_1; d; b) = \alpha_0 \left| F\{\vec{a}\}_0 \right|^2 + \alpha_1 \left| F\{\vec{a}\}_\omega \right|^2 + \alpha_2 \left| F\{\vec{a}\}_{2\omega} \right|^2 +$$
$$\ldots + \alpha_n \left| F\{\vec{a}\}_{n\omega} \right|^2 \to \min$$

qui est prise en compte analytiquement dans le calcul de l'image discriminée en profondeur et dans laquelle $F\{\vec{a}\}$ est une transformée fonctionnelle du vecteur $\vec{a}$, $\theta_1$ représente des coefficients scalaires servant à caractériser la variation de luminosité de l'éclairage, $d$ est une mesure de l'atténuation de la couleur de l'objet sous éclairage fluorescent, $b$ est un coefficient servant à caractériser la distribution non sinusoïdale de l'éclairage de l'objet et les coefficients de pondération $\alpha_i$ pour l'adaptation aux conditions d'enregistrement, de préférence en termes de rapports signal/bruit différents, sont des intervalles ou plus préférentiellement des fréquences.

Fig. 1

Fig. 2

▨▨▨ Region Of Interest
▒▒▒ Gitterlinien

Fig. 3

HA7611

Fig. 4

**IN DER BESCHREIBUNG AUFGEFÜHRTE DOKUMENTE**

**In der Beschreibung aufgeführte Patentdokumente**

- WO 976509 A
- WO 9845745 A
- WO 0212945 A